# EUROPEAN PATENT SPECIFICATION

(11) **EP 1 044 122 B1**
(45) Date of publication and mention of the grant of the patent: **09.02.2005**
(21) Application number: 99910854.1
(22) Date of filing: 27.03.1999
(51) Int. Cl.: B60R 21/22

(54) **DEPLOYING DIRECTION CONTROLLABLE AIRBAG STRUCTURE**
ENTFALTBARER GASSACK MIT RICHTUNGSKONTROLLE
DEPLOIEMENT D'UNE STRUCTURE DE COUSSIN GONFLABLE DE SECURITE ORIENTABLE

(30) Priority: 14.09.1998 KR 9837860; 14.09.1998 KR 9837861
(43) Date of publication of application: 18.10.2000
(73) Proprietor: Delphi Automotive Systems Sungwoo Corporation, Seoul (KR)
(72) Inventor: LEE, Byung-Hun, Seoul 133-080 (KR); JANG, Myun-Reun, Kunpo-si, KyoungGi-do 435-040 (KR)
(74) Representative: McDonough, Jonathan
(86) International application number: PCT/KR1999/000149
(87) International publication number: WO 2000/015472

(56) References cited:
- EP-A- 0 878 358
- EP-A- 1 107 884
- GB-A- 2 283 464
- US-A- 5 306 043
- US-A- 5 513 877

## Description

### Background of the Invention

The invention relates to an airbag in which deployment is restrained in a desirable direction, and particularly, to an airbag structure for controlling the deployment development direction such as an upper direction or other direction to protect a passenger in a vehicle in an emergency crash condition.

### Prior Art

In general, an airbag system has been mounted in a vehicle to protect passengers in an accidental head-on or rear collision. The airbag system is typically operated in a manner to inflow inflation gas momentarily generated by a gas generator in response to a crash sensor of known variety, into an airbag during the crash, thereby restraining the passengers from being thrust against the vehicle structure or parts.

Such airbag systems are supposed to have different installment positions and configurations for the passenger seat, or if used as a driver restraint by being mounted in a steering wheel. For example, a passenger airbag system is mounted between the instrument panel and dash board, and this type is further classified into low, middle and top ones. The top type is mounted on the bottom portion of the instrument panel to deploy the airbag from the lower position to the upper position. The middle type is installed in the middle portion of the instrument panel to deploy the airbag toward the front of the passenger and the low type on the lower portion of the instrument panel to deploy the airbag from the upper position to the lower position, thereby restraining the passenger.

It is well-known to skillful persons in this field that the various airbag systems make serious effects on the passenger's safety based on how to restrain the occupant on the seat. Therefore, the airbag system, particularly an airbag is requested to differentiate its configuration and shape in order to effectively protect the passenger according to the installation position thereof, and the configuration of a gas generator should be also changed. Considering these points, it is known that airbags should be changed in their configuration.

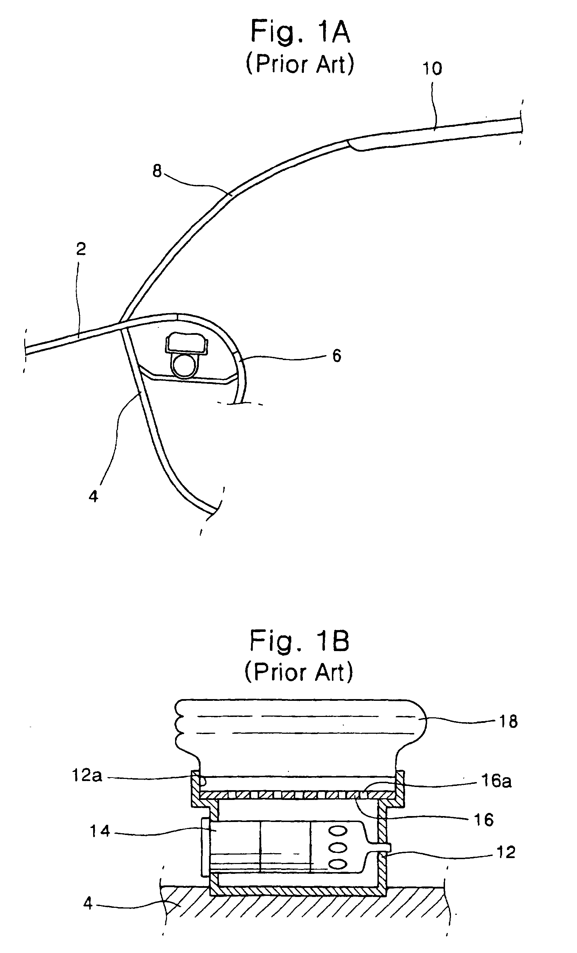

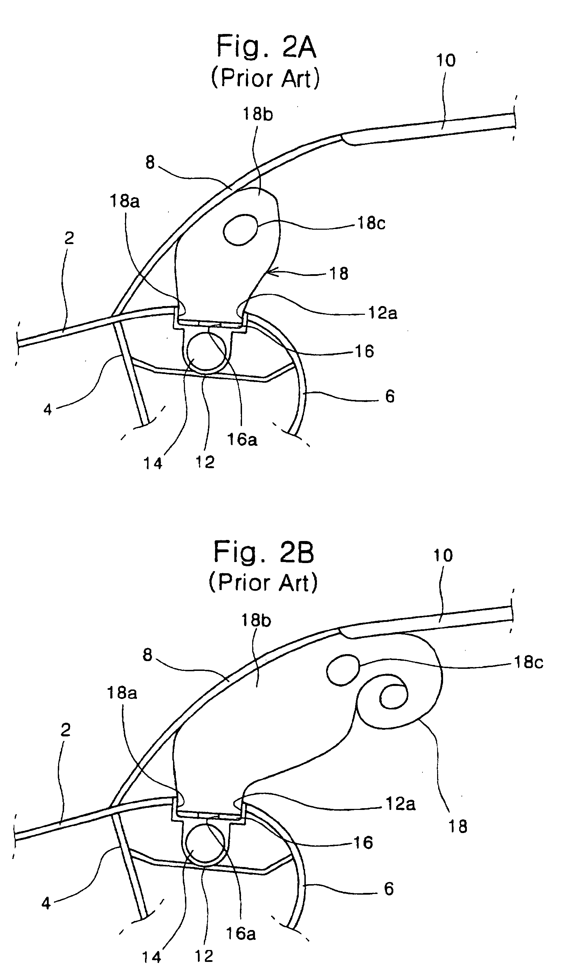

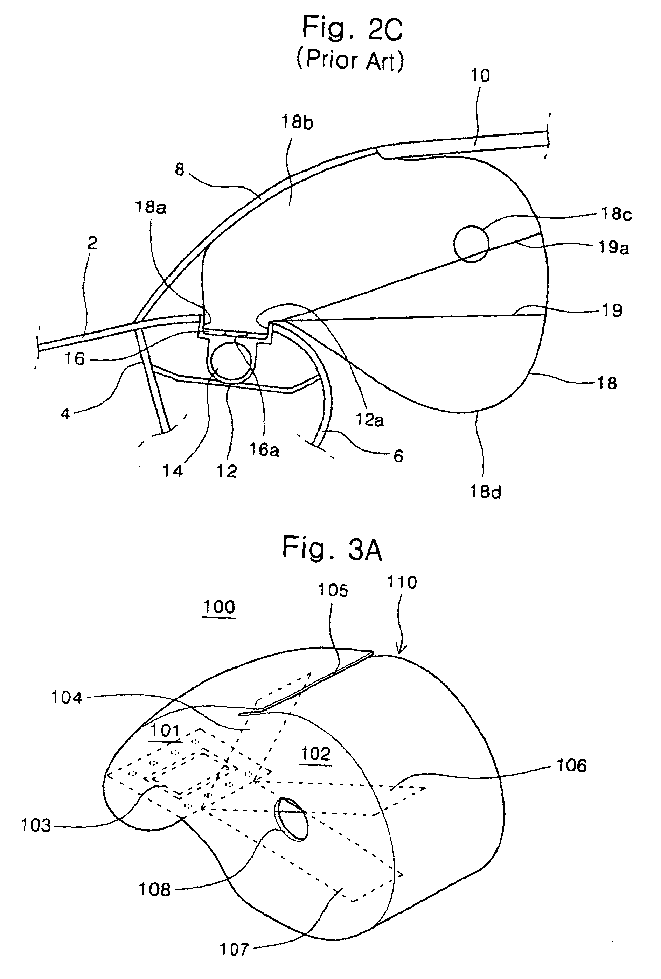

Herein, explaining an example of an airbag, the airbag system including the exemplified airbag is mounted below the instrument panel with a gas generator as shown in Figs. 1 and 2.

The airbag system as shown in Fig. 1A includes a gas generator 14 positioned in the space, which is wrapped around a hood 2 fixed to a cross member not shown, a dash panel 4 fixed to the cross member and an instrument panel 6, and an airbag cushion 18 coupled to the gas outlet portion of the gas generator 14. On both upper sides of the instrument a front glass 8 is installed by pillars not shown. The gas generator 14 is mounted in a housing 12 properly fixed on the dash panel 4 and includes an inflator electrically connected to an electronic control unit (ECU). An expanding portion 12a is formed to be extended from the upper portion of the housing 12, a diffuser 16 is positioned in the expanding portion 12a and includes a plurality of outlet holes formed thereon. An airbag cushion 18 is fixed on the upper portion of the diffuses 16 in a deflated, folded condition. The airbag cushion 18 is typically inflated by the gas pressure from the gas generator 14 so as to protect a passenger from secondary impact in a crash and includes a gas inlet opening or mouth 18a and a bubble portion 18b sewn to each other. The airbag cushion 18 includes a discharging hole 18c formed on both sides to prevent the transferring of an excessive gas inflation pressure to the passenger in the procedure of the gas pressure inflation. The airbag cushion 18 further includes tethers 19 and 19a longitudinally formed in turn with a predetermined length and width to restrain its inflation and deploy exactly in a predetermined direction.

Therefore, the airbag system enables a signal from the ECU to be applied to the gas generator 14, so that the airbag cushion 18 receives the gas pressure generated by the gas generator 14, instantly, and then the tethers 19 and 19b inflow the inflation gas along their lengthwise direction therein to restrain the passenger.

An airbag is normally put under an excessive gas inflow situation at the initial inflation. The airbag cushion 18 is first expanded and runs up against the windshield 8 thereby to stop the further advancement in a moment as shown in Fig. 2A. Then, the bubble portion 18b is deployed along the windshield 8 toward the inner portion of a vehicle as shown in Fig. 2B and inflated based on the gas inflowing guidance of the tethers 19 and 19a as shown in Fig. 2C.

But, the airbag has a problem in restraining the passenger, if a serious eccentricity happens to the blowing out direction of gas.

In light of this problem, it is very desirable if the passenger or driver is restrained in an optimum state regardless of the place where the airbag is mounted. Restraining the deploying direction of the airbag on time in a predetermined direction is a very important requirement.

Typically, U. S. Patent No. 5,382,048 discloses technically an airbag which is deployed lower and more toward the vehicle occupant's midsection or torso in a limited sense, but is mostly related to a fold configuration for an airbag.

A folded airbag cushion disclosed in the patent includes a few folds to deploy lower toward the midsection of the passenger. As the airbag cushion deployment deploys, pressurized gas stored therein pushes open each fold one after another until the airbag cushion is fully deployed. Since the folds are difficult for the inflator pressurized gas to push open, it reduces the velocity of the cushion as it unfolds.

The fold configuration of the airbag cushion includes an upper pleat and a lower pleat even in a lengthwise direction to tuck the center of fabrics toward the mouth thereof and then form a roll by the reference of the roll, in which the upper pleat is longer than the lower pleat.

But, because the airbag cushion is constructed to determine the direction of deployment according to the method of sewing the pleat, it causes the eccentricity that is escaped from the adjusted curvature as the pressurized gas blows out in a right angle direction. In other words, the airbag cushion is subjected to be inevitable from the eccentricity by the instant gas ejection, even though the predetermined pleats are formed and tucked by the reference of them. Actually, the lower pleat limits somewhat the inflation of the airbag cushion accompanying with the reduction effect of the cushion capacity, but does not control the gas ejection direction following the instant bubble of the airbag cushion roll. Therefore, the airbag has a problem in that the gas ejection direction is guided downward, but the substantial situation fails to control the deploying direction.

Considering these points, it is preferable that the gas ejection is directly guided in a predetermined direction. Also, it is desirable that an airbag cushion is foldable in a general manner without changing its own inherent shape.

Accordingly, an object of the invention is to provide an airbag structure including at least two chambers to adjust the amount of gas ejection and control the deployment direction thereof.

Another object of the invention is to provide an airbag structure including at least two chambers in which at least two tethers are mounted therein along a predetermined deployment direction, one side of which is sewed at the same position adjacent to each other and the other side of which is sewed in turn at every predetermined height.

Another object of the invention is to provide an airbag structure including at least two chambers in which at least two tethers are selectively or wholly coupled to a tuck folded in a predetermined length and made of the same fabric as the airbag cushion and for controlling the deploying direction without changing its own inherent shape.

US 5,306,043 relates to an airbag formed from a single continuous loop of flexible airbag material. The airbag includes a bend pleat which enables the airbag to bend around a vehicle instrument panel as it is inflated. The pleat may be tethered to the opposite side of the airbag.

US 5,513,877 discusses an airbag with an upper and lower lobe. The lobes are separated by a tether. The tether can be a solid panel with clearances along the sides. When the airbag is inflated it defines the lower lobe and also controls inflation of the upper lobe.

### SUMMARY OF THE INVENTION

An airbag structure according to the present invention is defined in appended claim 1.

According to the invention, an airbag structure comprises a first chamber for controlling the initial deployment direction of an airbag cushion; and a second chamber including a plurality of chambers formed in a desirable deploying direction as the airbag cushion unfolds in a sequence.

In the airbag structure, the first chamber comprises a tether coupled at one side to a tuck which is folded on the upper portion thereof in a predetermined area and other chambers formed in the second chamber, respectively, including a tether coupled to a tuck or a pleat which is folded or sewed in turn in a predetermined height on the airbag cushion.

Therefore, the invention enables an airbag cushion to determine the initial deployment direction and then to control the direction of deployment in a sequence, thereby effectively restraining a passenger.

### BRIEF DESCRIPTION OF THE DRAWINGS

The invention now will be described in detail with reference to the accompanying drawings, in which:
Fig. 1 shows a conventional airbag system mounted in a vehicle, in which Fig. 1A is a view illustrating the top mounting state of the airbag system for a passenger of a front seat; and Fig. 1B is a view illustrating the coupling configuration of an airbag and a gas generator.
Fig. 2 shows the operation of the conventional airbag, in which Fig. 2A is a view illustrating the operation that the airbag is deployed toward a windshield in an initial step; Fig. 2B is a view illustrating the operation of the airbag continuously deployed along the windshield; and Fig. 2C is a crosssectional view illustrating the state of the airbag fully deployed close to the windshield.
Fig. 3A is a perspective view illustrating the state of mounting an airbag structure on the mouth of a gas generator according to an example, useful for understanding the invention;
Fig. 3B is a perspective view illustrating the state of coupling an airbag structure with a gas generator according to the invention; and
Figs. 4A, 4B and 4C are crosssectional views illustrating the deployment operation of an airbag structure.

### DETAILED DESCRIPTION OF THE INVENTION

Figure 3A depicts an airbag structure useful for understanding the present invention. An airbag structure is mounted on the mouth of a gas generator. The airbag structure 100 forms an airbag cushion 110 during the deploying and includes a plurality of chambers, in which the airbag cushion 110 is typically divided into an inlet chamber 101 adjacent to the gas generator and a bubble chamber 102 for controlling the deploying direction thereof.

The inlet chamber 101 is supposed to properly repress the instant inlet opening 103 of gas from the gas generator. The gas inlet opening 103 is formed on the lower portion of the inlet chamber 101 in a manner to be fixed to an enlarging portion 12a of the gas generator 14, so that gas drawn out from a diffuse 16 is inflowed therein.

A tether 104 is sewed on one side of the lower portion and coupled to a tuck 105, so that the inlet chamber 101 is formed. The tuck 105 is folded lengthwise on the airbag cushion to have a predetermined width and sewed on both sides, so that both sides are placed in the deploying direction upon the folding of the airbag cushion 110 and elected in a predetermined direction upon the deployment ofthe airbag cushion 110 to block the movement of the ejection gas, instantly, as well as to control the deploying direction of the airbag cushion 110. The tether 104 is fixed at one side to the outlet bottom of the mouth 103 and at another side to the tuck 105. Therefore, when the airbag cushion 110 is instantly unfolded, the tuck 105 gives an instant resistance force against the gas ejection to the tether 104.

The bubble chamber 102 includes a predetermined number, for example, two tethers 106 and 107 arranged in a lengthwise direction as shown in the drawing. The tethers 106 and 107 are sewed at one side to the lower side of the tether 104 and sewed or coupled at the other side in turn to a pleat formed at a predetermined height along the deploying direction of the airbag cushion 110.

Otherwise, the tethers 106 and 107 also may not be sewed at other sides to the pleat. The tethers 106 and 107 can diffuse pressurized ejecting gas through both of their sides into the bubble chamber 102 to control the deploying direction.

On the other hand, the tethers 104,106 and 107 may include a hole respectively or selectively formed at their predetermined position to have different areas, if necessary. The tethers 106 and 107 may be coupled at the other side to a tuck formed at a predetermined height along the deploying direction of the airbag cushion 110 like the tether 104 to form a plurality of chambers. Discharging holes 108 are formed at a predetermined position on both sides of the bubble chamber 102 to relieve the gas ejecting pressure. Therefore, the tethers 104,106 and 107 can control the deploying direction of the airbag cushion 110 upon a crash, effectively.

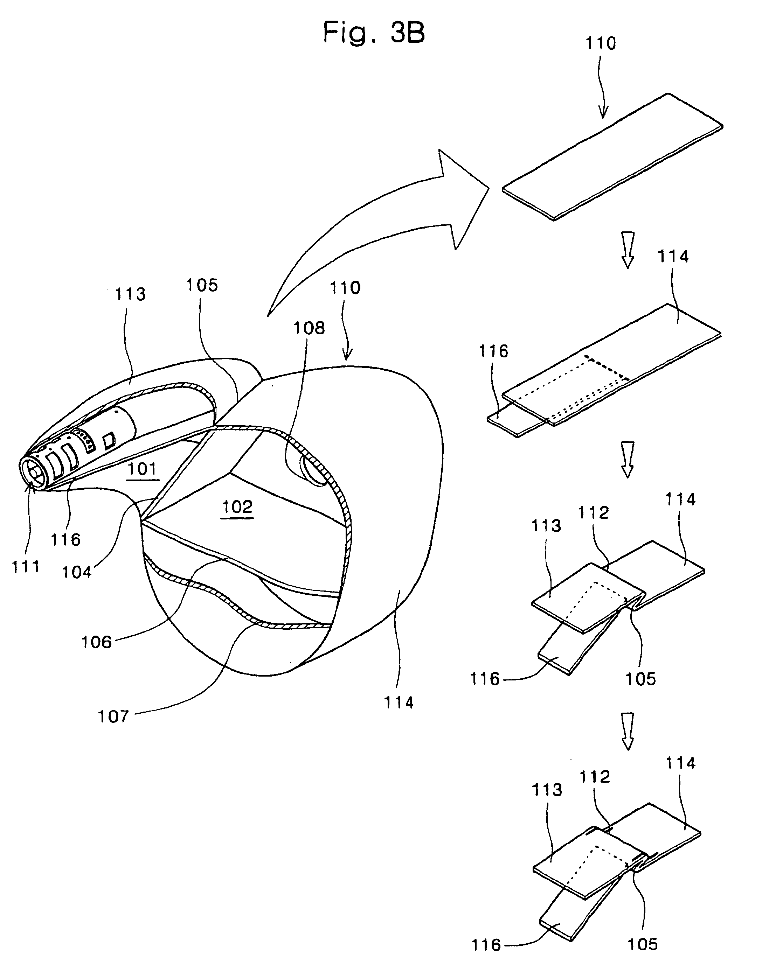

Referring to Fig. 3B, an airbag structure 100 is illustrated according to the principal of the invention. Herein, the same elements of Fig. 3A are referenced by the same numbers, so their detailed explanations are omitted.

An inlet chamber 101 is somewhat different from that of Fig. 3A in respect of its configuration, but it is simply varied according to the mounting method of the airbag structure 100. The inlet chamber 101 is supposed to receive a gas generator 111. Herein, it is noted that the gas generator 111 should be mounted at a predetermined place in the inner portion of a vehicle along with the inlet chamber 101, for example, fabrics. The airbag structure 100 is made as follows:

Assume that an airbag cushion 110 formed of fabrics a, b, c and d is in the procedure of being manufactured. The fabric a is a plain surface. The fabric b has a pleat 105 to form a tuck 113, an inlet cushion 113 and a bubble cushion 114 by the reference of the pleat 105 as described below. The fabric c includes a fixing portion 116 made of the same fabric as the airbag cushion 110, which is sewed to the pleat 105. The fixing portion 116 is shown in an opened state, but coupled to a rear stud of the gas generator 111 (not shown) to receive the gas generator 111. The fabric d includes the tuck 112 folded in a lengthwise direction to have a predetermined width and is sewed along both sides ofits folded portions. Therefore, the fixing portion 116 forms another inlet chamber 101'on the extension line coupled with the inlet cushion 113. Other portions of the airbag cushion 110 not explained are the same as the configuration of Fig. 3A.

The airbag cushion 110 enables the fixing portion 116 to absorb the gas pressure related to the tether 104 in the embodiment of Fig. 3A, firstly, upon the operating of the gas generator 111, but the deployment development of the bubble cushion 114 is similar to that of Fig. 3A.

On the other hand, the airbag structure 100 is folded with reference to the gas inlet portion, in a manner that the inlet chamber 101 is placed at the lower position in a lengthwise direction with respect to the gas generator and then the bubble chamber 102 is folded in a predetermined manner regardless of its folded shape.

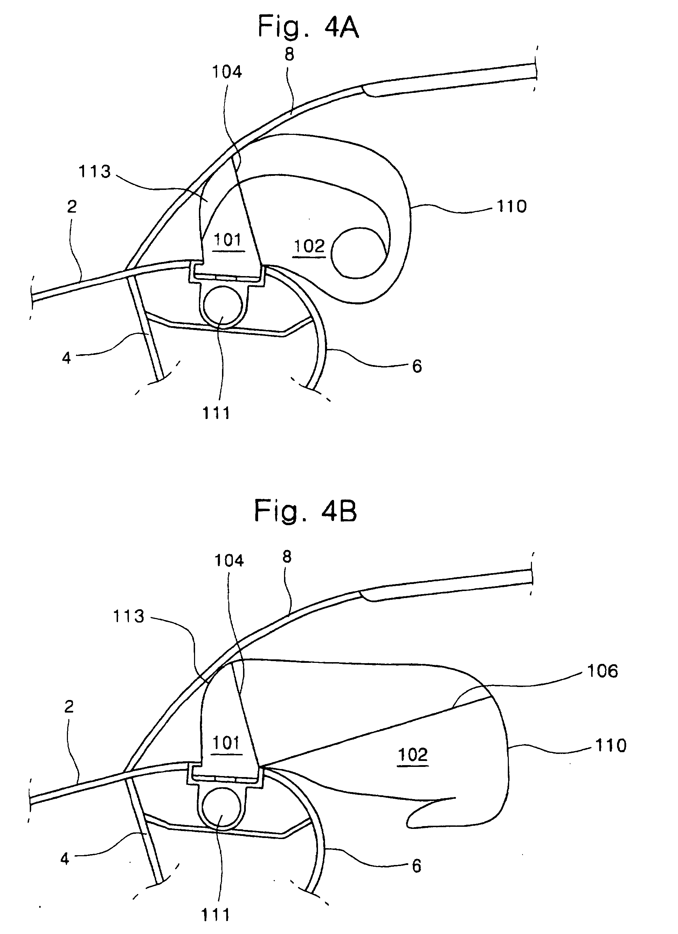

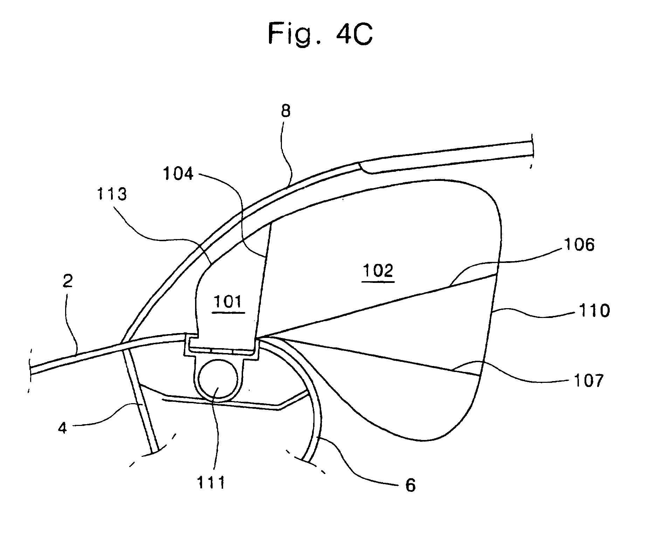

The airbag structure 100 folded and arranged on the gas generator is mounted on the predetermined position of a vehicle, for example, in the instrument panel, and operated as shown in Fig. 4. Herein, it is noted that the mounting place of the airbag structure 100 is not limited to the instrument panel. The same elements are referenced by the same numbers as described above.

As shown in Fig. 4A, when the gas generator 111 mounted between the instrument panel 2 and the dash board 4 is operated, the inlet chamber 101 is deployed in a gas ejecting direction, in a manner that the inlet cushion 113 is bubbled upward and the tether 104 is elected to form the inlet chamber 101 and/or 101'. The inlet chamber 101 is restrained to the space by the pleat or tuck 105 and its deploying direction is controlled by the tether 104, thereby preventing the clashing of the inlet cushion 113 against the windshield 8 and inflowing the ejecting gas toward the front portion in the bubble chamber 102. Then, as shown in Fig. 4B, the pressurized gas inflowed from the inlet chamber 101 is deployed along the direction that the tethers 106 and 107 are arranged in the bubble chamber 102. Continuously, the airbag cushion 110 is inflated toward a passenger as shown in Fig. 4C.

As described above, the invention classifies a plurality of chambers into their functions to control the deploying direction of an airbag cushion in multiple steps, so that the eccentricity with respect to the gas ejecting direction is correcte in a sequence to restrain the movement toward a desirable portion of a passenger.

## Claims

1. An airbag structure (100) comprising:
a first chamber (101) including an internal tether (104) for directing the instant gas pressure occurring upon the initial deployment of an airbag cushion and a pleat or tuck (105) for controlling the deployment direction of the airbag cushion, in which one side of the tether is coupled to the tuck;
a plurality of second chambers (102), formed at predetermined heights in the direction of deployment as the airbag cushion unfolds in a sequence;
a fixing portion (116), one side of which is coupled to the tuck along with the tether (104) and the other side of which is fixed to a rear stud of a gas generator (111) remote from the tether (104) thereby defining an inlet chamber by the fixing portion (116).

2. The airbag structure according to claim 1, in which:
the first chamber (101) includes the tether (104) coupled at one side to a tuck which is folded on the upper portion thereof in a predetermined area and the second chamber (102) includes a plurality of chambers formed therein, in which the chambers each include a respective tether coupled to a respective tuck or a pleat which is folded or sewed in turn of a predetermined height in the airbag cushion.

3. The airbag structure according to claim 1, in which:
the tuck (105) is formed between the first or second chambers (101, 102).

4. The airbag structure according to any preceding claim in which:
the tuck (105) formed between the first and second chambers is folded lengthwise in a predetermined width and sewed along its sides lengthwise.

## Patentansprüche

1. Airbagaufbau (100) mit:
einer ersten Kammer (101), die einen internen Haltegurt (104) zum Lenken des anstehenden Gasdrucks nach der anfänglichen Entwicklung eines Airbagkissens und eine Faltung oder einen Saum (105) zur Steuerung der Entwicklungsrichtung des Airbagkissens aufweist, bei der eine Seite des Haltegurts mit der Faltung verbunden ist,
einer Mehrzahl von zweiten Kammern (102), die in festgelegten Höhen in Entwicklungsrichtung ausgeformt sind, wie sich das Airbagkissen in der Abfolge entfaltet,
einem Befestigungsabschnitt (116), von dem eine Seite mit der Faltung entlang dem Haltegurt (104) verbunden und die andere Seite an einem rückseitigen Stift eines Gasgenerators befestigt ist (111), entfernt von dem Haltegurt (104) und dabei eine Einlasskammer durch den Befestigungsabschnitt (116) bildend.

2. Airbagaufbau nach Anspruch 1,
bei dem die erste Kammer (101) den Haltegurt (104) an einer Seite mit einer Faltung verbunden aufweist, die über dessen oberen Abschnitt in einem festgelegten Bereich gefaltet ist, und die zweite Kammer (102) eine Mehrzahl darin ausgeformter Kammern umfasst, bei denen die Kammern jeweils einen entsprechenden Haltegurt aufweisen, der mit einer entsprechenden Faltung oder Saum verbunden ist, welche der Reihe nach in festgelegter Höhe in dem Airbagkissen gefaltet oder genäht sind.

3. Airbagaufbau nach Anspruch 1,
bei dem die Faltung (105) zwischen ersten oder zweiten Kammern (101, 102) ausgeformt ist.

4. Airbagaufbau nach irgendeinem vorhergehenden Anspruch,
bei dem die zwischen den ersten oder zweiten Kammern ausgeformte Faltung (105) in festgelegter Breite längsgefaltet und entlang ihrer Seiten längs vernäht ist.

## Revendications

1. Structure formant coussin gonflable de sécurité (100) comprenant :
une première chambre (101) comprenant une attache interne (104) destinée à orienter la pression gazeuse instantanée qui apparaît lors du déploiement initial d'un coussin gonflable de sécurité, et un pli ou un repli (105) destiné à commander la direction de déploiement du coussin gonflable de sécurité, un côté de l'attache étant couplé au repli ;
une pluralité de deuxièmes chambres (102), formées à des hauteurs prédéterminées dans la direction de déploiement au fur et à mesure que le coussin gonflable de sécurité se déplie successivement ;
une partie de fixation (116), dont un côté est couplé au repli avec l'attache (104) et dont l'autre côté est fixé à un appendice arrière d'un générateur de gaz (111) éloigné de l'attache (104), définissant ainsi une chambre d'entrée par la partie de fixation (116).

2. Structure formant coussin gonflable de sécurité selon la revendication 1, dans laquelle :
la première chambre (101) comprend l'attache (104) couplée, d'un côté, à un repli qui est replié sur sa partie supérieure, dans une zone prédéterminée, et la deuxième chambre (102) comprend une pluralité de chambres formées à l'intérieur, les chambres comprenant, chacune, une attache respective couplée à un repli respectif ou à un pli qui est plié ou cousu, tour à tour, à une hauteur prédéterminée, dans le coussin gonflable de sécurité.

3. Structure formant coussin gonflable de sécurité selon la revendication 1, dans laquelle :
le repli (105) est formé entre les première ou deuxième chambres (101, 102).

4. Structure formant coussin gonflable de sécurité selon l'une quelconque des revendications précédentes, dans laquelle :
le repli (105) formé entre les première et deuxième chambres est replié dans le sens de la longueur sur une largeur prédéterminée et cousu sur ses côtés dans le sens de la longueur.
